Europäisches Patentamt

European Patent Office

Office européen des brevets

(11) Veröffentlichungsnummer: **0 371 345**
**A2**

(12) **EUROPÄISCHE PATENTANMELDUNG**

(21) Anmeldenummer: 89121259.9

(22) Anmeldetag: 17.11.89

(51) Int. Cl.⁵: **B01D 29/88, B01D 35/16**

(30) Priorität: 19.11.88 DE 3839198

(43) Veröffentlichungstag der Anmeldung:
06.06.90 Patentblatt 90/23

(84) Benannte Vertragsstaaten:
**CH DE FR GB IT LI**

(71) Anmelder: **Seitz Enzinger Noll Maschinenbau Aktiengesellschaft**
**Neckarauer Strasse 140-162 Postfach 645**
**D-6800 Mannheim 1(DE)**

(72) Erfinder: **Seydlitz, Klaus**
**Zur schönen Aussicht 10**
**D-6551 Gutenberg(DE)**
Erfinder: **Klasson, Reinhold, Dipl.-Ing. (F.H.)**
**Beim Steinkreuz 8**
**D-6573 Simmertal(DE)**
Erfinder: **Pfeiffer, Werner, Dipl.-Ing. (F.H.)**
**Heddesheimer Strasse 46**
**D-6531 Guldental(DE)**

(54) **Austragsventil für Behälter.**

(57) Die Erfindung bezieht sich auf ein Austragsventil für Behälter, insbesondere zur Verwendung bei Filtern, bestehend aus wenigstens einem eine Ventilöffnung aufweisenden Ventilkörper, der mit einer im wesentlichen ebenen Fläche einen, die Ventilöffnung umschließenden Ventilsitz bildet, gegen den bei geschlossenem Austragsventil ein Ventilteller mit einer zweiten Fläche dichtend anliegt. Der Ventilsitz sowie der beim Öffnen des Austragsventils vom Ventilsitz wegbewegte Ventilteller sind in einem geschlossenen Austragsraum untergebracht. Um eine verbesserte und vor allem auch gefahrlose Reinigung des Austragsventils im Bereich des Ventilsitzes und/oder des Ventiltellers zu erreichen, ist in dem geschlossenen Austragsraum eine Reinigungseinrichtung für den Ventilsitz und/oder den Ventilteller vorgesehen.

EP 0 371 345 A2

## Austragsventil für Behälter

Die Erfindung bezieht sich auf ein Austragsventil für Behälter, insbesondere zur Verwendung bei Filtern gemäß Oberbegriff Patentanspruch 1.

Insbesondere bei Filtern bzw. Filtereinrichtungen ist es üblich, sogenannte "Austragsventile" vorzusehen, über die eine Reinigung des Filterinnenraums, d.h. ein Austragen der beim Filtrieren eines Suspension im Filterinnenraum abgeschiedenen Trub- bzw. Feststoffe, die den Filterkuchen bilden und nachfolgend als "Filterrückstände" bezeichnet werden, von Zeit zu Zeit möglich ist. Diese bekannten Austragsventile bestehen grundsätzlich aus einem Ventilkörper mit einer in der Regel großflächigen Ventilöffnung sowie aus einem Ventilteller, der zum Öffnen und Schließen des Austragsventils relativ zum Ventilkörper in der Achsrichtung der Ventilöffnung bewegbar ist und bei geschlossenem Austragsventil dichtend gegen eine Fläche bzw. einen Ventilsitz des Ventilkörpers anliegt.

Derartige Austragsventile sind dann insbesondere auch bei Filtereinrichtungen jeweils Bestandteil einer Austragvorrichtung, die ein besonders sauberes Austragen von Filterrückständen gestattet und einen Austragsraum aufweist, dessen Einlaß von dem an der Filtereinrichtung vorgesehenen Austragsventil gebildet ist und über dessen Auslaß die Filterrückstände bei geöffnetem Austragsventil abgeführt werden können.

Nachteilig ist bei den bekannten Austragsventilen, daß sich beim Ausräumen bzw. Reinigen der Filtereinrichtung eine Verschmutzung insbesondere der den Ventilsitz bildenden Fläche des Ventilkörpers oder des bei geschlossenem Austragsventil dem Ventilsitz oder der Ventilöffnung benachbarten Teils des Ventiltellers durch Filterrückstände nicht vermeiden läßt und somit eine manuelle Reinigung insbesondere dieser Bereiche des Austragsventils, d.h. ein Entfernen von an diesen Bereichen angelagerten Produktrückständen erforderlich ist, was dann, wenn ein geschlossener Austragsraum verwendet ist, ein Öffnen dieses Austragsraumes erforderlich macht. Gerade in diesem Fall ist das Reinigen des Austragsventils nicht nur aufwendig, sondern kann bei bestimmten Produkten durch das Öffnen des Austragsraumes auch zu einer Gefährdung des Bedienungspersonals und/oder der Umwelt führen. Außerdem sind die Qualität der Reinigung sowie die sich hieraus ergebende Dichtigkeit des nach dem Reinigen wieder geschlossenen Austragsventils in hohem Maße davon abhängig, mit welcher Sorgfalt die Reinigung jeweils durchgeführt wurde.

Aufgabe der Erfindung ist es, ein Austragsventil aufzuzeigen, welches eine verbesserte und gefahrlose Reinigung ermöglicht.

Zur Lösung dieser Aufgabe ist ein Austragsventil entsprechend dem kennzeichnenden Teil des Patentanspruches 1 ausgebildet.

Mit der Reinigungseinrichtung des erfindungsgemäßen Austragsventils ist ein zuverlässiges Reinigen des Ventilsitzes und/oder des Ventiltellers möglich, und zwar ohne Gefährdung des Bedienungspersonals und/oder der Umwelt, da diese Reinigung bei geschlossenem Austragsraum vorgenommen werden kann.

Bei einer Ausführungsform der Erfindung weist die Reinigungseinrichtung eine Abschab- oder Abstreifeinrichtung mit wenigstens einem im Austragsraum angeordneten Abstreifelement sowie eine Betätigungseinrichtung auf, welche zum Reinigen des geöffneten Austragsventils eine Relativbewegung zwischen dem Abstreifelement und dem Ventilsitz und/oder zwischen dem Abstreifelement und zumindest einem Teil des Ventiltellers ermöglicht, welcher (Teil) bei geschlossenem Austragsventil dem Ventilsitz bzw. der Ventilöffnung benachbart ist. Das Abstreifelement ist hierbei beispielsweise ein Schaber, der zum Reinigen des Ventilsitzes dient und für diesen Zweck aus einer Ausgangsposition außerhalb des Ventilsitzes mit seiner Schaberkante an der den Ventilsitz bildenden ersten Fläche gleitend zumindest entlang des gesamten Ventilsitzes bewegbar ist. Der Schaber ist bevorzugt aus seiner Ausgangsposition in eine Endposition und aus dieser zurück in die Ausgangsposition bewegbar, wobei bei der Bewegung aus der Ausgangsposition in die Endposition der Schaber mit seiner Schaberkante zumindest über den gesamten, den Ventilsitz bildenden Bereich der Fläche des Ventilkörpers gleitet. Vorzugsweise ist der Schaber bei dieser Ausführungsform dann so an der Betätigungseinrichtung vorgesehen, daß er beim Rückführen aus der Endposition in die Ausgangsposition von der Fläche des Ventilkörpers abgehoben werden kann, so daß die gereinigte, den Ventilsitz bildende Fläche beim Rückführen des Schabers in die Ausgangsposition nicht wieder verschmutzt wird.

Bei einer weiteren Ausführungsform der Erfindung, bei der (Ausführungsform) der Ventilteller kolbenartig ausgebildet ist und einen Abschnitt aufweist, der bei geschlossenem Austragsventil in die Ventilöffnung hineinreicht, dient das Abstreifelement zum Reinigen dieses Abschnittes. Das Abstreifelement ist dabei vorzugsweise so ausgebildet, daß es den vorgenannten Abschnitt des Ventiltellers an seinem Umfang wenigstens teilweise umschließt. Bevorzugt ist das Abstreifelement ein auf der Umfangsfläche des des vorgenannten Abschnitts angeordneter Abstreif- oder Hilfsring, der durch Relativbewegung zwischen Ventilteller und Hilfsring die Reinigung des vorgenannten Abschnitts des Ventiltellers an seiner Umfangsfläche bewirkt.

Für eine Reinigung des Ventilsitzes und/oder des Ventiltellers mit einem gasförmigen oder flüssigen Reinigungsmedium kann die Reinigungseinrichtung auch von wenigstens einer in dem Austragsraum angeordneten Austrittsdüse gebildet sein bzw. eine solche Austrittsdüse aufweisen.

Weiterbildungen der Erfindung sind Gegenstand der Unteransprüche.

Die Erfindung wird im folgenden anhand der Figuren an Ausführungsbeispielen näher erläutert. Es zeigen:

Fig. 1 in Teildarstellung und im Schnitt eine Filtereinrichtung in Form eines Druckfilters zusammen mit einer ein Austragsventil gemäß der Erfindung aufweisenden Austragvorrichtung;

Fig. 2 die Austragvorrichtung gemäß Fig. 1 in vergrößerter Schnittdarstellung entsprechend der Linie I-I der Fig. 1;

Fig. 3 in Einzeldarstellung und teilweise im Schnitt die Abschab- oder Abstreifeinrichtung des Austragsventils der Austragvorrichtung gemäß Fig. 1 in Seitenansicht, d.h. in Blickrichtung des Pfeiles A der Fig. 2, zusammen mit einem den Ventilsitz bildenden plattenartigen Ventilkörper sowie zusammen mit dem Ventilteller in seiner geschlossenen Stellung;

Fig. 4 und 5 eine ähnliche Darstellung wie in den Fig. 2 und 3, jedoch bei einer weiteren Ausführungsform mit einem als Abstreifelement dienenden Hilfsring;

Fig. 6 in Teildarstellung und im Schnitt den Ventilkörper, Ventilteller sowie den dort vorgesehenen Hilfsring bei einer gegenüber den Fig. 4 und 5 modifizierten Ausführung;

Fig. 7 und 8 die Austragvorrichtung in einer den Fig. 2 und 3 entsprechenden Darstellung, jedoch bei einer weiteren Ausführungsform der Erfindung.;

Fig. 9 eine ähnliche Darstellung wie Fig. 5, jedoch zusätzlich mit einer Reinigungseinrichtung unter Verwendung einer Reinigungsflüssigkeit oder Blasluft und bei geöffnetem Ventilteller;

Fig. 10 ein Flußdiagramm.

In den Figuren ist 1 eine Filtereinrichtung, z.B. Filternutsche, welche im wesentlichen aus einem Behälter besteht, der in an sich bekannter Weise durch ein Filterelement 2 in zwei Kammern 3 und 4 unterteilt ist, von denen die obere Kammer 3 zum Zuführen der zu filternden Flüssigkeit (Suspension) und die untere Kammer 4 zum Sammeln und Abführen der gefilterten Flüssigkeit (Filtrat) dienen.

Zum Reinigen der Filtereinrichtung 1 bzw. zum Austragen der auf dem Filterelement 2 abgeschiedenen, ausgefilterten Filterrückstände ist die Filtereinrichtung 1 für einen seitlichen Austrag mit einer Austragvorrichtung 5 versehen, die ein Austragen der Filterrückstände bzw. des Filterkuchens ermöglicht, ohne daß hierfür die Filtereinrichtung 1 geöffnet werden muß und das Bedienungspersonal mit diesen Filterrückständen unmittelbar in Kontakt kommt.

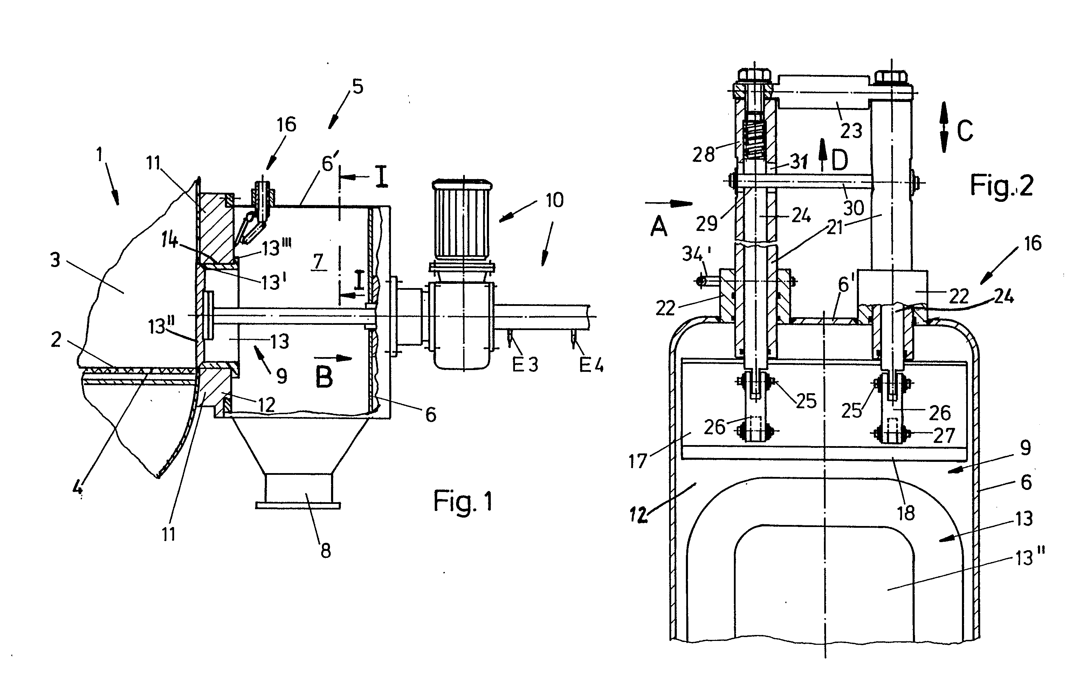

Die Austragvorrichtung 5 besteht im wesentlichen aus einem seitlich an dem Behälter der Filtereinrichtung vorgesehenen geschlossenen Gehäuse 6, dessen Innenraum 7 an der Unterseite in einen trichterartigen Auslaß 8 zum Abführen der Filterrückstände übergeht. Der Innenraum 7 des Gehäuses 6 steht weiterhin über ein Austragsventil, welches bei der Ausführungsform der Fig. 1-3 allgemein mit 9 bezeichnet ist, mit der Kammer 3 in Verbindung. Zum Entfernen der Filterrückstände wird dieses normalerweise geschlossene Austragsventil 9 mittels eines motorischen oder hydraulischen Antriebs 10 geöffnet, so daß dann mit einer in der Kammer 3 vorgesehenen Ausräumeinrichtung (z.B. Rührer) die Filterrückstände über das geöffnete Austragsventil 9, die Kammer 7 sowie den Auslaß 8 abgeführt werden können.

Bei der in den Fig. 1-3 dargestellten Ausführungsform besteht das Austragsventil 9 im wesentlichen aus einem plattenartigen Ventilkörper 11, der im Bereich seiner einen vertikalen Seite an dem Behälter der Filtereinrichtung 1 befestigt ist, mit einer der Filtereinrichtung 1 abgewandten, im wesentlichen ebenen vertikalen Fläche 12 im Innenraum 7 der Austragvorrichtung 5 liegt und mit dieser Fläche 12 den Ventilsitz für den Ventilteller 13 des Austragsventils 9 bildet. Im Ventilkörper 11 ist eine Ventilöffnung 14 vorgesehen, über die bei geöffnetem Austragsventil die Kammer 3 der Filtereinrichtung 1 mit dem Innenraum 7 der Austragvorrichtung 5 in Verbindung steht und die bei geschlossenem Austragsventil 9 durch den Ventilteller 13 verschlossen ist. Der Ventilteller 13 besteht aus einem hohlkolbenartigen Abschnitt 13', der an seiner der Filtereinrichtung 1 zugewandten Seite durch einen Wandabschnitt 13" verschlossen ist und an seinem der Filtereinrichtung 1 abgewandten, offenen Ende mit einem über die Umfangsfläche des Abschnittes 13" radial wegstehenden Flansch 13"' versehen ist. Bei geschlossenem Austragsventil 9 reicht der Abschnitt 13' in die Ventilöffnung 14 hinein und der Flansch 13"' liegt mit seiner dem Wandabschnitt 13" zugewandten Seite im Bereich eines dort vorgesehenen Dichtungsringes 15 dichtend gegen einen die Ventilöffnung 14 umschließenden Bereich der Fläche 12 an. Zum Öffnen des Austragsventils 9 wird der Ventilteller 13, dessen Außenquerschnitt im Bereich des Abschnittes 13' an den Querschnitt der Ventilöffnung 14 angepaßt ist, mit Hilfe des Antriebs 10 in horizontaler Richtung entsprechend dem Pfeil B aus der Ventilöffnung 14 herausbewegt, so daß dann bei geöffnetem Austragsventil 9 dieser Ventilteller 13 auch mit seinem Wandabschnitt 13″ in genügend großem Abstand von der Fläche 12 angeordnet ist.

Beim Austragen der Filterrückstände läßt es sich nicht vermeiden, daß sich insbesondere auch an dem die Ventilöffnung 14 umschließenden Bereich der Fläche 12, der den Ventilsitz bildet, Filterrückstände anlagern, durch die dann ein dichtes Schließen des Austragsventils 9 nicht mehr möglich ist. Um derartige Anlagerungen zu vermeiden bzw. vor dem Schließen des Austragsventils 9 (Bewegen des Ventiltellers 13 entgegen dem Pfeil B) zu entfernen, ohne daß hierfür ein Öffnen der Austragvorrichtung 5 erforderlich ist, ist an dieser Austragvorrichtung bzw. an dem Austragsventil 9 eine manuell betätigbare Abschab- oder Abstreifeinrichtung 16 vorgesehen. Diese Abschab- oder Abstreifeinrichtung besitzt einen Schaber 17 mit einer unteren, horizontalen Schaberkante 18, die sich in Richtung senkrecht zur Bewegungsrichtung B des Ventiltellers 13 über die gesamte oder nahezu die gesamte Breite der Fläche 12 erstreckt. Zur Bildung der Schaberkante 18 ist der als rechteckförmige Platte ausgebildete Schaber 17 im Bereich seiner unteren horizontalen Längskante bei 19 abgeschrägt, wobei sich diese Abschrägung an der der Fläche 12 abgewandten Seite des Schabers 17 befindet. Im Bereich seiner oberen, horizontalen Längskante ist der Schaber 17 jeweils mittels eines Gelenkbolzens 20 an dem unteren Ende eines hülsenartigen Betätigungselementes 21 angelenkt. Die beiden Gelenkbolzen 20 sind mit ihren Achsen achsgleich in einer parallel zur Schaberkante 18 verlaufenden Achsrichtung angeordnet. Die beiden Betätigungselemente 21, die jeweils in einer an einem oberen Wandabschnitt 6′ des Gehäuses 6 vorgesehene Führung 22 in Richtung ihrer senkrecht zur Bewegungsrichtung B des Ventiltellers 13 und damit parallel zur Fläche 12 verlaufenden vertikalen Längsachse für eine auf- und abgehende Bewegung (Doppelpfeil C) geführt sind, reichen mit ihrem unteren, jeweils den Gelenkbolzen 20 aufweisenden Ende in den Innenraum 7 der Austragvorrichtung 5 hinein und stehen mit ihrem oberen Ende über die Oberseite dieser Austragvorrichtung 5 vor. An ihrem oberen Ende sind die Betätigungselemente 21 durch eine Traverse 23 starr miteinander verbunden, so daß die Betätigungselemente 21 eine gemeinsame Betätigungseinrichtung bilden.

In jedem Betätigungselement 21 ist ein axial zu diesem Betätigungselement 21 verschiebbarer stangenartiger Stößel 24 vorgesehen, der mit seinem unteren Ende über das untere Ende des zugehörigen Betätigungselementes 21 vorsteht und dort mittels eines Gelenkbolzens 25 gelenkig mit dem einen Ende eines Gelenkhebels 26 verbunden ist, dessen anderes Ende über einen Gelenkbolzen 27 an der der Fläche 11 abgewandten Seite des Schabers 17 angelenkt ist. Die Gelenkbolzen 25 und 27 liegen mit ihren Achsen parallel zu der Achse der Gelenkbolzen 20. Weiterhin ist die Anordnung so getroffen, daß in einer Richtung senkrecht zur Fläche 12 jeder Gelenkbolzen 20 dieser Fläche 12 näherliegt als der jeweilige Gelenkbolzen 25 und bei gegen die Fläche 12 anliegender Schaberkante 18 die Längsachse des Gelenkhebels 26 mit der Fläche 12 einen Winkel kleiner als 90° einschließt, der sich zur Oberseite der Austragvorrichtung 5 hin öffnet, also dementsprechend bei gegen die Fläche 12 anliegender Schaberkante 18 in einer Achsrichtung senkrecht zur Fläche 12 der Abstand des Gelenkbolzens 27 von dieser Fläche 12 kleiner ist als der entsprechende Abstand des Gelenkbolzens 25.

Gegen das obere Ende jedes Stößels 24 liegt eine im zugehörigen Betätigungselement 21 vorgesehene Druckfeder 28 an, die sich mit ihrem oberen Ende gegen eine im Inneren des Betätigungselementes 21 vorgesehene Abstützfläche abstützt. Jeder Stößel 24 besitzt an seinem oberen Ende, welches in dem außerhalb der Austragvorrichtung 5 liegenden Teil des zugehörigen Betätigungselementes 21 vorgesehen ist, eine Querbohrung 29, in die jeweils das eine Ende einer parallel zur Traverse 23 liegende Stange 30 eingreift, die auch durch Langlöcher 31 in den Wandungen der Betätigungselemente 21 hindurchgeführt ist. Durch gleichzeitiges Umfassen auch der Traverse 23 kann die Stange 30 manuell unter Zusammendrücken der Druckfedern 28 auf die Traverse 23 zubewegt werden (Pfeil D), wobei über die mit der Stange 30 in ihrer Achsrichtung mitbewegten Stößel 24 sowie über den Gelenkhebel 26 der Schaber 17 um die Gelenkbolzen 20 derart geschwenkt wird, daß die Schaberkante 18 von der Fläche 12 abhebt. Bei nichtbetätigter Stange 30 liegt der Schaber 17 mit seiner Schaberkante 18 durch die Wirkung der Druckfedern 28 gegen die Fläche 12 an. Die Durchtrittsstellen der Betätigungselemente 21 an den Führungen 22 bzw. der Stößel 24 an dem jeweiligen Betätigungselement 21 sind durch Ringdichtungen 32 und 33 abgedichtet.

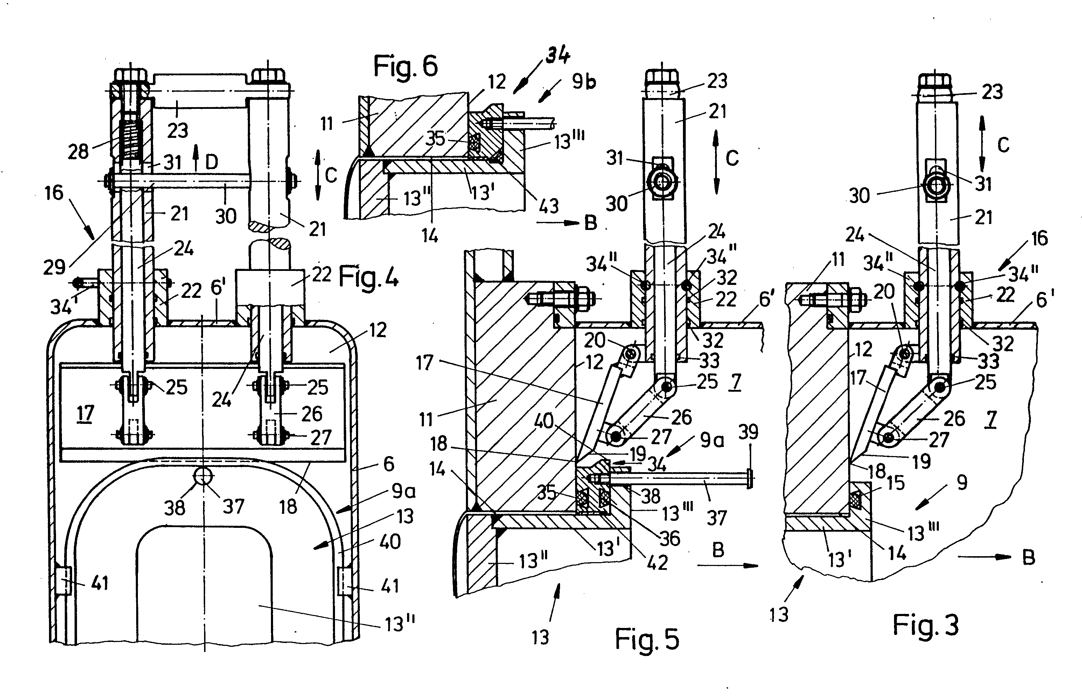

An einer der beiden Führungen 22 ist ein gabelartiges Sicherungselement 34′ vorgesehen, welches bei angehobener bzw. in Ruhestellung befindlicher Abschab- oder Abstreifeinrichtung das zugehörige Betätigungselement 21 und damit die Abschab- oder Abstreifeinrichtung 16 insgesamt in der in den Fig. 2 und 3 dargestellten angehobenen Stellung fixiert.

Das Sicherungselement 34′ liegt dabei mit seinen beiden Gabelarmen 34″ teilweise in einer in der betreffenden Führung 22 gebildeten Ausnehmung sowie in einer ringförmigen Nut, die an der Außenfläche des betreffenden Betätigungselementes 21 vorgesehen ist.

Bei geöffnetem Austragsventil 9, d.h. vom Ventilkörper 11 wegbewegtem Ventilteller 13 wird zum Reinigen der Fläche 12 zunächst das Sicherungselement 34' manuell entfernt und dann anschließend die von den Betätigungselementen 21 gebildete Betätigungseinrichtung manuell in vertikaler Richtung nach unten bewegt, so daß durch den Schaber 17 bzw. dessen Schaberkante 18 an der Fläche 12 angelagerte Filterrückstände entfernt werden. Sobald die von den Betätigungselementen 21 gebildete Betätigungseinrichtung ihre unterste Stellung erreicht hat und sich die Schaberkante 18 über den gesamten, den Ventilsitz bildenden Bereich der Fläche 12 bewegt hat, wird die Stange 30 gegen die Wirkung der Druckfedern 28 in Richtung des Pfeiles D auf die Traverse 23 zubewegt, wodurch der Schaber 17 mit seiner Schaberkante 18 von der Fläche abhebt. Anschließend kann der Schaber 17 wieder nach oben bewegt werden. Durch das vorbeschriebene Abheben des Schabers 17 von der Fläche 12 ist sichergestellt, daß die zuvor gereinigte Fläche 12 nicht evtl. beim Nachobenbewegen des Schabers 17 erneut mit am Schaber angelagerten Filterrückständen verunreinigt wird. Der beschriebene Reinigungsvorgang der Fläche 12 mittels des Schabers 17 kann vor dem Schließen des Austragsventils 9 mehrfach wiederholt werden.

In den Fig. 4 und 5 ist eine Ausführungsform dargestellt, die ein Austragsventil 9a aufweist und sich von der vorbeschriebenen Ausführungsform nur dadurch unterscheidet, daß an dem Ventilteller 13 ein zusätzlicher Hilfsring 34 vorgesehen ist, der den Abschnitt 13' des Ventiltellers 13 an seiner Umfangsfläche umschließt. Dieser Hilfsring 34, der bei geschlossenem Austragsventil 9a zwischen der Fläche 12 und dem Flansch 13'' des Ventiltellers 13 angeordnet ist, besitzt an seiner der Fläche 12 zugewandten sowie an seiner dem Flansch 13'' zugewandten Stirnfläche jeweils einen Dichtungsring 35 bzw. 36, der bei geschlossenem Austragsventil 9a gegen den den Ventilsitz bildenden Bereich der Fläche 12 bzw. gegen die der Fläche 12 zugewandten Fläche des Flansches 13'' dichtend anliegt. Der Hilfsring 34 ist in Achsrichtung des Ventiltellers 13, d.h. in Bewegungsrichtung B frei verschiebbar auf dem Abschnitt 13' des Ventiltellers 13 vorgesehen. An wenigstens zwei, um 180° um die Achse des Ventiltellers 13 versetzten Bereichen ist an dem Hilfsring 34 jeweils eine Stange 37 mit einem Ende befestigt, die mit ihrer Achse parallel zur Achse des Ventiltellers 13 liegt, über die dem Flansch 13'' zugewandte Seite des Hilfsringes 34 wegsteht und durch eine im Flansch 13'' vorgesehene Bohrung 38 hindurchreicht. An ihrem über die dem Hilfsring 34 abgewandte Seite des Flansches 13'' wegstehenden freien Ende ist die Stange mit einem Bund oder Kopf 39 versehen, dessen Außenquerschnitt größer ist als der Querschnitt der Bohrung 38. Weiterhin steht der Hilfsring 34 zumindest in einem Teilbereich seines Umfangs mit einem Abschnitt 40 über die Umfangsfläche des Flansches 13'' weg.

Beim Öffnen des Austragsventils 9a, d.h. beim Bewegen des Ventiltellers 13 in Richtung des Pfeiles A wird zunächst der Hilfsring mit diesem Ventilteller mitbewegt. Sobald der Wandabschnitt 13'' des Ventiltellers 13 einen genügend großen Abstand von der Ventilöffnung 14 aufweist, kommen die Abschnitte 40 jeweils gegen im Innenraum 7 der Austragvorrichtung 5 vorgesehene ortsfeste Anschläge 41 zur Anlage, wodurch der Hilfsring 34 bei der weiteren Öffnungsbewegung des Ventiltellers 13 in Richtung des Pfeiles B festgehalten wird und sich dann der Ventilteller 13 relativ zu dem Hilfsring bewegt. Die Öffnungsbewegung des Ventiltellers 13 ist abgeschlossen, wenn die der Fläche 12 des Ventilkörpers 11 zugewandte Außenfläche des Wandabschnittes 13'' des geöffneten Ventiltellers 13 in etwa fluchtend mit der der Fläche 12 zugewandten Seite des Hilfsringes 34 liegt bzw. der Hilfsring 34 mit dieser Seite geringfügig über die vorgenannte Außenfläche des Wandabschnittes 13'' vorsteht.

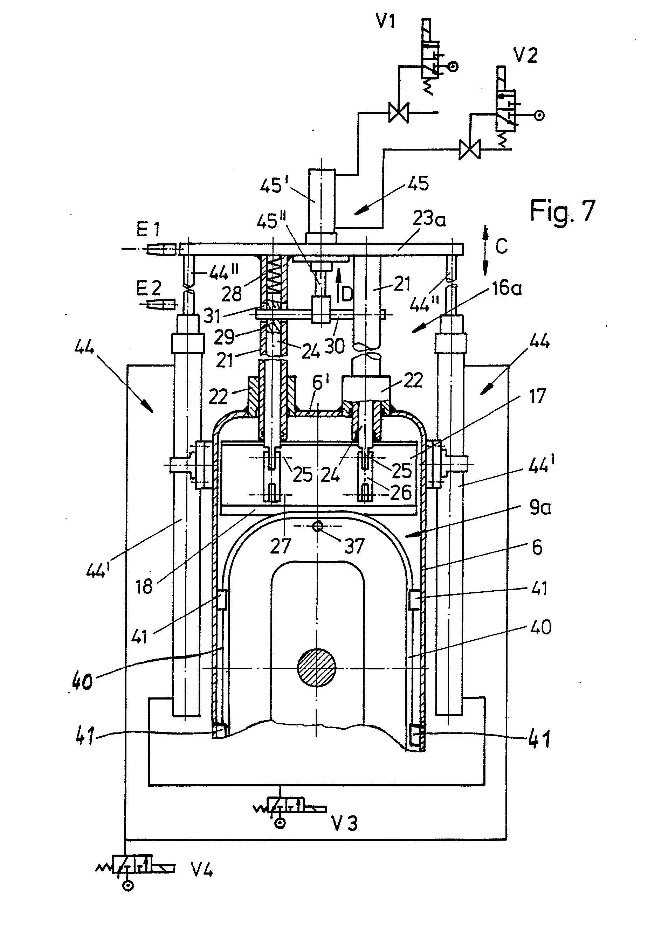

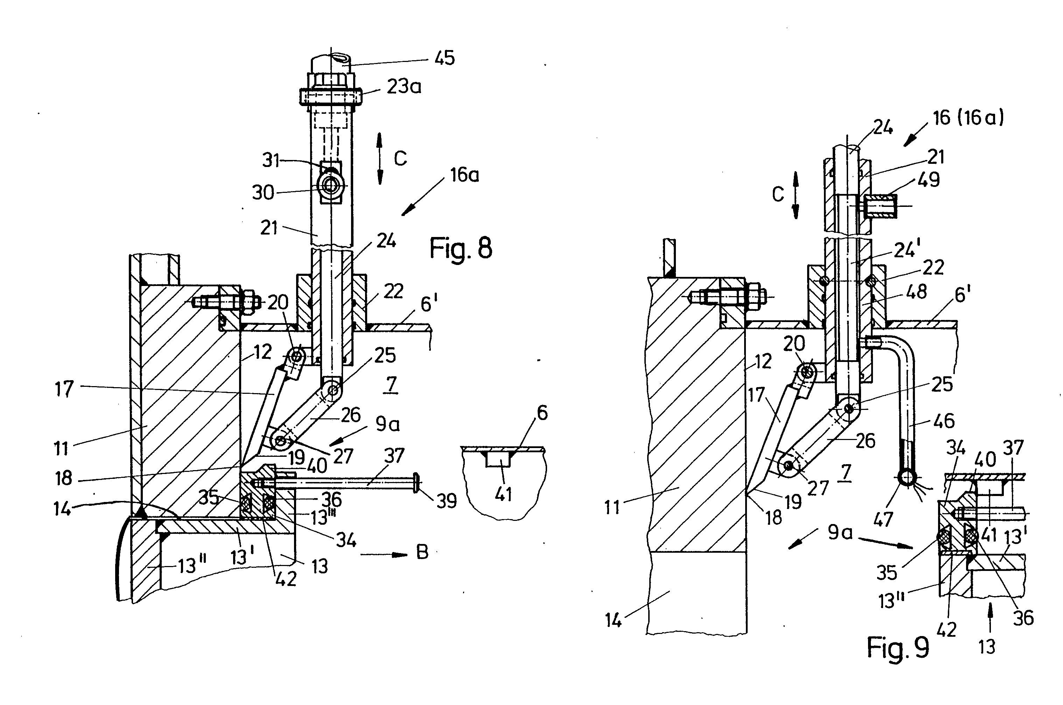

Der Öffnungszustand des Austragsventils 9a ist in der Fig. 9 dargestellt, wobei dort, ebenso wie in den Fig. 5 und 8 allerdings der Anschlag 41 versetzt dargestellt ist. Tatsächlich weisen diese Anschläge die aus den Fig. 4 und 7 ersichtliche Position auf. Die Stangen 37 dienen für eine zusätzliche Führung des Hilfsringes 34, vor allem aber verhindern diese Stangen 37, daß der Ventilkörper 13 bei dem vorbeschriebenen Öffnen des Austragsventils 9a vollständig aus dem von den Anschlägen 41 zurückgehaltenen Hilfsring 34 herausgezogen werden kann. Der Hilfsring 34, der mit einem Gleit- und-/oder Dichtungsring 42 auf der Umfangsfläche des Abschnittes 13' aufliegt, wirkt durch die vorbeschriebene Relativbewegung zwischen Ventilteller 13 und Hilfsring 34 als Abstreifelement, das eine Reinigung der Umfangsfläche des Abschnittes 13' des Ventiltellers 13 von evtl. Filterrückständen bewirkt. Die Reinigung des von der Fläche 12 gebildeten Ventilsitzes erfolgt in der vorbeschriebenen Weise durch manuelle Betätigung der Abschab- oder Abstreifeinrichtung 16.

Fig. 6 zeigt in modifizierter Ausführung ein Austragsventil 9b, welches sich von dem Austragsventil 9a lediglich dadurch unterscheidet, daß anstelle des am Hilfsring 34 vorgesehenen Dichtungsringes 36 am Ventilteller 13 ein Dichtungsring 43 vorgesehen ist.

In den Fig. 7 und 8 ist eine weitere Ausfüh-

.rungsform der Erfindung dargestellt, die sich von den vorbeschriebenen Ausführungsformen im wesentlichen nur dadurch unterscheidet, daß die Abschab- oder Abstreifeinrichtung l6a nicht manuell, sondern durch Stellglieder betätigt wird. Die Fig. 7 und 8 zeigen wiederum das vorstehend bereits beschriebene Austragsventil 9a mit dem zusätzlichen Hilfsring 34. Die Abschab-oder Abstreifeinrichtung 16a entspricht hinsichtlich des Schabers 17, der beiden Betätigungselemente 21, der zugehörigen Führungen 22, der beiden Stößel 24, der Gelenkhebel 26, der beiden Druckfedern 28, der Stange 30 sowie aller anderen Funktionselemente der Abschab- oder Abstreifeinrichtung 16, wobei allerdings die Abschab- oder Abstreif einrichtung 16a das Sicherungselement 34′ nicht aufweist und anstelle der Traverse 23 eine Traverse 23a besitzt, die beidendig über die Betätigungselemente 21 wegsteht. Zur motorischen Betätigung der Abschab- oder Abstreifeinrichtung 16a dienen pneumatische Kolben-Zylinder-Anordnungen, von denen zwei derartige Anordnungen 44 mit ihren zugehörigen Zylindern 44′ jeweils an der Außenfläche des Gehäuses 6 der Austragvorrichtung 5 befestigt sind und mit ihren zugehörigen Kolbenstangen 44″ an jeweils einem Ende der Traverse 23a angreifen. In der Mitte der Traverse 23a zwischen den beiden Betätigungselementen 21 ist die Kolben-Zylinder-Anordnung 45 mit ihrem Zylinder 45′ befestigt. Die Kolbenstange 45″ dieser Kolben-Zylinder-Anordnung 45 greift an der Stange 30 an. Durch entsprechendes, gesteuertes Betätigen der Kolben-Zylinder-Anordnungen 44 und 45 ist es somit möglich, die Fläche 12 bzw. den Ventilsitz für den Ventilteller 13 in der vorbeschriebenen Weise zu reinigen.

Wie die Fig. 7 zeigt, erfolgt die Steuerung der Kolben-Zylinder-Anordnung durch die beiden Ventile V 1 und V 2, wobei eine Betätigung des Ventils V 1 eine Bewegung der Stange 30 entgegen dem Pfeil D nach unten und eine Betätigung des Ventils V 2 eine Bewegung der Stange 30 in Richtung des Pfeiles D nach oben bewirkt.

Die beiden Kolben-Zylinder-Anordnungen 44 werden gemeinsam durch die Ventile V 3 und V 4 gesteuert, wobei eine Betätigung des Ventiles V 3 eine Bewegung der Traverse 23a und damit des Schabers 17 nach oben und eine Betätigung des Ventiles V 4 eine Bewegung der Traverse 23a und damit des Schabers 17 nach unten bewirken. Die obere und untere Stellung der Traverse 23a sowie des Schabers 17 werden durch zwei Endschalter E 1 und E 2 oder ähnlich wirkende Sensoren überwacht. Weiterhin sind noch an dem Antrieb 10 für das Austragsventil 9a bzw. für den Ventilteller 13 zwei Endschalter E 3 und E 4 oder ähnlich wirkende Sensoren vorgesehen (Fig. 1), von denen der Endschalter E 3 die geschlossene Stellung des Austragsventils 9a und der Endschalter E 4 die geöffnete Stellung des Austragsventils 9a registrieren.

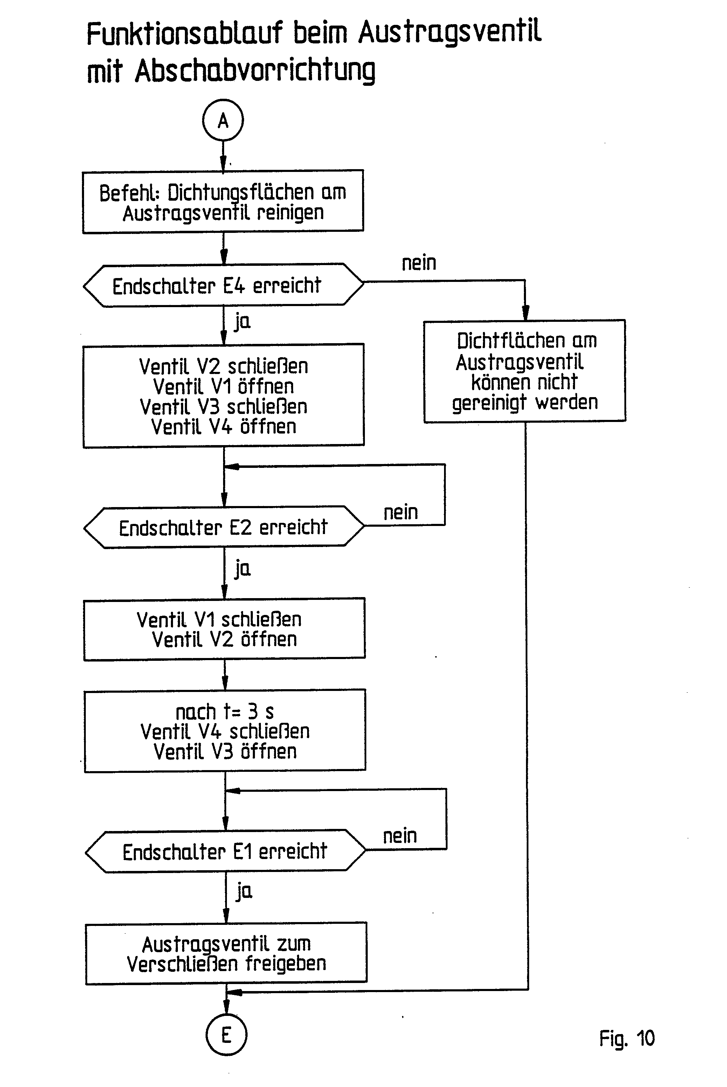

Mit Hilfe der Ventile V 1 - V 4 und der Endschalter E 1 - E 4 ist dann auch eine automatische Steuerung des Reinigungsvorganges bzw. der Abschab- oder Abstreifeinrichtung 16a entsprechend dem in der Fig. 10 wiedergegebenen Flußdiagramm möglich.

Wie die Fig. 9 zeigt, ist es auch möglich, zusätzlich zu der Abschab- oder Abstreifeinrichtung 16 oder 16a noch eine weitere Reinigungseinrichtung für den Ventilteller 13 und/oder den Hilfsring 34 vorzusehen. Diese Reinigungseinrichtung besteht aus wenigstens einem Rohr 46, welches an seinem unteren Ende eine Düse 47 zum Austritt einer Reinigungsflüssigkeit oder zum Austritt von Blasluft aufweist und mit seinem oberen Ende an dem in den Innenraum 7 hineinreichenden Teil eines Betätigungselementes 21 befestigt ist und dort in einen Ringkanal 48 mündet, der zwischen diesem Betätigungselement 21 und einem Abschnitt 24′ mit vermindertem Querschnitt des Stößels 24 gebildet ist. Der Ringkanal 48 steht außerhalb des Innenraumes 7 mit einem Anschluß 49 in Verbindung, an welchem eine Schlauchleitung zum Zuführen der Reinigungsflüssigkeit bzw. der Blasluft angeschlossen ist.

Die Düse 47 ist so angeordnet, daß sie bei in der oberen Stellung befindlichen Betätigungselementen 21 oberhalb des Ventiltellers 13 und des Hilfsringes 34 und außerhalb des Bewegungsraumes dieser Elemente liegt und außerdem in der Öffnungsstellung des Ventiltellers 13 der Fläche 12 näherliegt als der Wandabschnitt 13″, so daß beim Nachunten-Bewegen der Betätigungselemente 21 mittels der Düse 47 der Hilfsring 34 sowie der Ventilteller 13 an ihren den Ventilkörper 11 zugewandten Flächen gereinigt werden, beim Schliessen des Austragsventils 9a gleichzeitig auch eine zusätzliche Reinigung zumindest der Außenfläche des Abschnittes 13′ sowie der dem Ventilkörper 11 zugewandten Fläche des Flansches 13‴ wenigstens an der Oberseite des Ventiltellers 13 erfolgen.

Anstelle von oder zusätzlich von der Düse 47 kann auch wenigstens eine entsprechende Düse für eine Reinigung des Schabers 17 mit der Reinigungsflüssigkeit bzw. mit der Blasluft vorgesehen sein. Selbstverständlich ist es auch möglich, die Düse 47 so auszubilden, daß sie sowohl zur Reinigung des Ventiltellers 13 und des Hilfsrings 34, als auch zur Reinigung des Schabers 17 dient.

Bei der vorbeschriebenen Ausführungsform ist der plattenartige Ventilkörper 11 mit dem Behälter der Filtereinrichtung 1 verschweißt. Dieser Ventilkörper 11 kann aber auch eine Baueinheit mit dem Gehäuse 6 bilden. In diesem Fall ist am Behälter der Filtereinrichtung 1 eine Aufflanschplatte vorgesehen, an welcher dann der Ventilkörper 11 in geeigneter Weise befestigt ist.

**Ansprüche**

1. Austragsventil für Behälter, insbesondere zur Verwendung bei Filtern, bestehend aus einem wenigstens eine Ventilöffnung aufweisenden Ventilkörper, der mit einer im wesentlichen ebenen ersten Fläche einen, die Ventilöffnung umschließenden Ventilsitz bildet, gegen den bei geschlossenem Austragsventil ein Ventilteller mit einer zweiten Fläche dichtend anliegt, wobei der Ventilsitz sowie der beim Öffnen des Austragsventils vom Ventilsitz wegbewegte Ventilteller in einem geschlossenen Austragsraum untergebracht sind, gekennzeichnet durch wenigstens eine im Austragsraum vorgesehene Reinigungseinrichtung (16, 16a, 47) für den Ventilsitz und/oder den Ventilteller.

2. Austragsventil nach Anspruch 1, dadurch gekennzeichnet, daß die Reinigungseinrichtung eine Abschab- oder Abstreifeinrichtung (16, 16a) mit wenigstens einem im Austragsraum (7) angeordneten Abstreifelement (17, 34) sowie eine Betätigungseinrichtung (21; 10, 40, 41) aufweist, welche zum Reinigen des geöffneten Austragsventils eine Relativbewegung zwischen dem Abstreifelement (17, 34) und dem Ventilsitz und/oder zumindest einem bei geschlossenem Austragsventil dem Ventilsitz bzw. der Ventilöffnung benachbarten Teil des Ventiltellers (13) ermöglicht.

3. Austragsventil nach Anspruch 2, dadurch gekennzeichnet, daß das wenigstens eine Abstreifelement ein wenigstens eine Schaberkante (18) aufweisender Schaber (17) ist, der zum Reinigen des Ventilsitzes aus einer Ausgangsposition außerhalb dieses Ventilsitzes mit seiner Schaberkante (18) an der ersten Fläche (12) gleitend zumindest entlang des gesamten Ventilsitzes bewegbar ist.

4. Austragsventil nach Anspruch 3, dadurch gekennzeichnet, daß der Schaber (17) aus der Ausgangsposition mit seiner Schaberkante (18) über den gesamten, den Ventilsitz bildenden Bereich der ersten Fläche (12) gleitend in eine Endposition und aus dieser zurück in die Ausgangsposition bewegbar ist.

5. Austragsventil nach Anspruch 4, dadurch gekennzeichnet, daß die Abschab- oder Abstreifeinrichtung (16, 16a) Mittel (24, 26) aufweist, die ein Rückführen des Schabers (17) aus der Endposition in die Ausgangsposition bei von der ersten Fläche (12) abgehobener Schaberkante (18) ermöglichen.

6. Austragsventil nach Anspruch 4 oder 5, dadurch gekennzeichnet, daß die Betätigungseinrichtung für den Schaber (17) von wenigstens einem stangen- oder hülsenförmigen Betätigungselement (21) gebildet ist, welches in einer mit dem Ventilkörper (11) verbundenen Führung (22) in einer Achsrichtung parallel oder im wesentlichen parallel zu der ersten Fläche verschiebbar geführt ist.

7. Austragsventil nach einem der Ansprüche 2-6, dadurch gekennzeichnet, daß die Betätigungseinrichtung bzw. das wenigstens eine Betätigungselement (21) mit einem Teilabschnitt aus dem Austragsraum (7) herausgeführt ist und an diesem Teilabschnitt eine Handhabe (23) für eine manuelle Betätigung aufweist und/oder an diesem Teilabschnitt mit wenigstens einem Antriebselement (44) für eine motorische Betätigung der Abschab- oder Abstreifeinrichtung (16, 16a) verbunden ist.

8. Austragsventil nach einem der Ansprüche 3-7, dadurch gekennzeichnet, daß der Schaber (17) schwenkbar, vorzugsweise um eine parallel zur ersten Fläche (12) verlaufende Achse (20) schwenkbar am Betätigungselement (21) befestigt ist.

9. Austragsventil nach Anspruch 8, dadurch gekennzeichnet, daß die Betätigungseinrichtung der Abschab- oder Abstreifeinrichtung (16, 16a) wenigstens einen in seiner Achsrichtung vorzugsweise gegen die Wirkung wenigstens eines Federelementes (28) aus einer Arbeitsstellung verschiebbaren Stößel (24) aufweist, und daß dieser Stößel (24) so auf den schwenkbaren Schaber (17) einwirkt, daß bei in Arbeitsstellung befindlichem Stößel (24) der Schaber (17) mit seiner Schaberkante (18) gegen die erste Fläche (12) anliegt und beim Bewegen des Stößels (24) aus seiner Arbeitsstellung der Schaber (17) mit seiner Schaberkante (18) von der ersten Fläche (12) weggeschwenkt wird.

10. Austragsventil nach Anspruch 9, dadurch gekennzeichnet, daß der Stößel (24) an einem aus dem Austragsraum (7) herausgeführten Teilabschnitt eine Handhabe (30) für eine manuelle Betätigung aufweist und/oder an diesem Teilabschnitt mit einem Antriebselement (45) für eine motorische Betätigung verbunden ist.

11. Austragsventil nach Anspruch 9 oder 10, dadurch gekennzeichnet, daß der Stößel (24) mit einem in den Austragsraum (7) hineinreichenden Ende über wenigstens einen Gelenkhebel (26) gelenkig mit dem Schaber (17) verbunden ist.

12. Austragsventil nach einem der Ansprüche 9-11, dadurch gekennzeichnet, daß der Stößel (24) in einem hülsenartigen Betätigungselement (21) axial verschiebbar vorgesehen ist.

13. Austragsventil nach Anspruch 12, dadurch gekennzeichnet, daß die Betätigungseinrichtung der Abschab- oder Abstreifeinrichtung (16, 16a) wenigstens zwei parallel zu und im Abstand voneinander vorgesehene hülsenartige Betätigungselemente (21) aufweist, die an den Enden ihrer aus dem Austragsraum (7) herausgeführten Teilabschnitte durch eine Traverse (23, 23a) miteinander verbunden sind, daß in jedem Betätigungselement (21) ein Stößel (24) axial verschiebbar vorgesehen ist, und daß vorzugsweise beide Stößel (24) durch eine senkrecht zur Achse dieser Stößel (24) verlaufende weitere Traverse oder Stange (30) miteinander verbunden sind.

14. Austragsventil nach einem der Ansprüche 2-13, gekennzeichnet durch Mittel (34′, 34″) zum Verriegeln der Betätigungseinrichtung (21) in einer der Ausgangsposition des Schabers (17) entsprechenden Stellung.

15. Austragsventil nach einem der Ansprüche 2-14, dadurch gekennzeichnet, daß der mit dem wenigstens einen Abstreifelement (34) zu reinigende Teil des Ventiltellers (13) die Außen- bzw. Umfangsfläche eines Abschnittes (13′) dieses Ventiltellers (13) ist, mit welchem (Abschnitt) der Ventilteller (13) bei geschlossenem Austragsventil (9a, 9b) in die Ventilöffnung (14) hineinreicht.

16. Austragsventil nach Anspruch 15, dadurch gekennzeichnet, daß das Abstreifelement (34) den Abschnitt (13′) des Ventiltellers (13) wenigstens teilweise umschließt.

17. Austragsventil nach Anspruch 16, dadurch gekennzeichnet, daß das Abstreifelement von einem an dem Ventilteller (13) vorgesehenen und den Abschnitt (13′) dieses Ventiltellers (13) umschließenden Hilfsring (34) gebildet ist, und daß beim Öffnen und Schließen des Austragsventils (9a, 9b) der Hilfsring (34) und der Ventilteller (13) in Achsrichtung (B) des Ventiltellers (13) relativ zueinander verschiebbar sind.

18. Austragsventil nach Anspruch 17, dadurch gekennzeichnet, daß der Hilfsring (34) an einer dem Ventilkörper (11) zugewendeten Seite die zweite Fläche bildet und mit dieser, vorzugsweise unter Mitwirkung wenigstens eines Dichtungsringes (35) bei geschlossenem Austragsventil (9a, 9b) dichtend gegen den Ventilsitz (12) anliegt, und daß bei geschlossenem Austragsventil (9a, 9b) ein am Ventilteller (13) gebildeter Flansch (13‴) vorzugsweise ebenfalls unter Mitwirkung wenigstens eines Dichtungsringes (36, 43) dichtend gegen eine dem Ventilkörper (11) abgewendete Seite des Hilfsringes (34) anliegt.

19. Austragsventil nach einem der Ansprüche 15-18, gekennzeichnet durch wenigstens einen mit dem Abstreifelement (34) zusammenwirkenden ortsfesten Anschlag (41), der derart angeordnet ist, daß beim Öffnen des Austragsventils (9a, 9b) vor Erreichen der endgültigen Öffnungsstellung des Ventiltellers (13) zunächst das Abstreifelement (34) gegen diesen Anschlag (41) zur Anlage kommt und dadurch gegenüber dem sich noch weiter in die endgültige Öffnungsstellung bewegenden Ventilteller (13) festgehalten wird.

20. Austragsventil nach einem der Ansprüche 1-19, dadurch gekennzeichnet, daß die Reinigungseinrichtung wenigstens eine Austrittsdüse (47) für ein gasförmiges oder flüssiges Reinigungsmedium vorzugsweise zum Reinigen des Ventiltellers (13) und/oder des Hilfsringes (34) aufweist.

Fig. 1

Fig. 2

EP 0 371 345 A2

Fig. 3

Fig. 5

Fig. 6

Fig. 4

Fig. 7

Fig. 8

Fig. 9

EP 0 371 345 A2

# Funktionsablauf beim Austragsventil mit Abschabvorrichtung

Flussdiagramm:

(A)

Befehl: Dichtungsflächen am Austragsventil reinigen

Endschalter E4 erreicht — nein → Dichtflächen am Austragsventil können nicht gereinigt werden

ja

Ventil V2 schließen
Ventil V1 öffnen
Ventil V3 schließen
Ventil V4 öffnen

Endschalter E2 erreicht — nein

ja

Ventil V1 schließen
Ventil V2 öffnen

nach t= 3 s
Ventil V4 schließen
Ventil V3 öffnen

Endschalter E1 erreicht — nein

ja

Austragsventil zum Verschließen freigeben

(E)

Fig. 10

SEITZ ENZINGER NOLL